# EUROPEAN PATENT APPLICATION

(11) **EP 4 131 558 A1**
(43) Date of publication of application: **08.02.2023**
(21) Application number: 21774998.5
(22) Date of filing: 19.01.2021
(51) Int. Cl.: H01M 10/0587, H01M 50/20

(54) **BATTERY MODULE**

(30) Priority: 23.03.2020 JP 2020050939
(71) Applicant: SANYO Electric Co., Ltd., Daito-shi Osaka 574-8534 (JP)
(72) Inventor: KAMIYAMA, Yuma, Osaka-shi, Osaka 540-6207 (JP); YAMADA, Tomoyuki, Osaka-shi, Osaka 540-6207 (JP)
(74) Representative: Novagraaf International SA
(86) International application number: PCT/JP2021/001689
(87) International publication number: WO 2021/192545

(57) **Abstract**

A battery module comprising: a battery integrated body in which a plurality of rectangular secondary batteries are layered; a pair of end plates that sandwich the battery integrated body from both sides in the layering direction of the secondary batteries: and a pair of side-surface securing members provided on both side surfaces of the secondary batteries that form a bridge between the end plates, and a top-surface securing member provided on the top surface of the secondary batteries, each secondary battery including a flat wound electrode body in which a positive electrode and a negative electrode are wound with a separator interposed therebetween, so that the winding axes are in the transverse direction, and the winding ends of the negative electrodes of at least the secondary batteries adjacent to the end plates face upward, the winding ends being positioned in the gap between half the height of the electrode body and the top part of the curved section of the electrode body in a cross-section orthogonal to the winding axes.

## Description

### TECHNICAL FIELD

The present disclosure relates to a battery module.

### BACKGROUND

In the related art, there is known a battery module in which a plurality of rectangular secondary batteries are connected to each other and layered. Because there is a possibility of deposition of lithium on a negative electrode when a distance between a positive electrode and the negative electrode of an electrode assembly included within each battery becomes large, in the battery module, a battery integrated assembly in which a plurality of batteries are layered is constrained by sandwiching the battery integrated assembly with a pair of end plates from a direction of layering of the battery, so as to prevent the distance between the positive electrode and the negative electrode from becoming large. In a battery module disclosed in Patent Literature 1, a battery integrated assembly is sandwiched by a pair of end plates bridged by a fixation member placed on a side surface, a constraining load is applied, and the applied constraining load at a lower part of a rectangular secondary battery is adjusted, so as to suppress deposition of a metal contained in the positive electrode, on the negative electrode, due to gas generated by repetition of charging and discharging.

### CITATION LIST

### PATENT LITERATURE

PATENT LITERATURE 1: JP 2018-133199 A

### SUMMARY

From the viewpoint of increased capacity, in some cases, the battery module is formed using a large-size rectangular secondary battery. In this case, because a size of the end plate also becomes large, rigidity thereof is reduced in comparison to the related art, and the end plate tends to be more easily deflected to an outer side during charging of the secondary battery. The present inventors have found that, when the end plate is deflected to the outer side, the end plate and a secondary battery adjacent to the end plate are spaced apart at a region near a center part in a lateral direction, resulting in a larger distance between a winding completion end of the negative electrode and the positive electrode, and possible deposition of lithium near the winding completion end of the negative electrode, depending on a direction and a position of the winding completion end of the negative electrode. Because the deposition of lithium may become a cause of internal short-circuiting, such deposition of lithium must be suppressed. Patent Literature 1 does not review the deflection of the end plate, and there still remains a room of improvement.

According to one aspect of the present disclosure, there is provided a battery module including: a battery integrated assembly in which a plurality of rectangular secondary batteries are layered; a pair of end plates that sandwich the battery integrated assembly from respective sides in a direction of layering of the secondary batteries; and a side surface fixation member provided on a side surface of the secondary battery, and an upper surface fixation member provided on an upper surface of the secondary battery, that bridge the end plates to each other, wherein the secondary battery includes a wound-type electrode assembly having a flat shape in which a positive electrode and a negative electrode are wound with a separator therebetween, in such a manner that a winding axis thereof is disposed in a lateral direction, and, in at least the secondary battery adjacent to the end plate, a winding completion end of the negative electrode faces upward, and is positioned between a half of a height of the electrode assembly and a top part of a curved part of the electrode assembly in a cross section orthogonal to the winding axis.

According to the battery module of an aspect of the present disclosure, deposition of lithium at the winding completion end of the negative electrode can be suppressed.

### BRIEF DESCRIPTION OF DRAWINGS

FIG. 1 is a perspective diagram of a battery module according to an embodiment of the present disclosure.
FIG. 2 is a plan view of a battery module according to an embodiment of the present disclosure.
FIG. 3 is a perspective diagram of a secondary battery included in a battery module according to an embodiment of the present disclosure, and showing an internal structure in a state in which a page-front side of an outer housing is removed.
FIG. 4A is a plan view of a region near an end plate of a battery module according to an embodiment of the present disclosure, in a charging state.
FIG. 4B is a diagram showing a cross section along a line A-A of FIG. 4A.
FIG. 5A is a diagram showing a battery module of related art, and corresponding to FIG. 4A.
FIG. 5B is a diagram showing a battery module of related art, and corresponding to FIG. 4B.

### DESCRIPTION OF EMBODIMENTS

A battery module according to an embodiment of the present disclosure will now be described in detail with reference to the drawings. The battery module of the present disclosure is not limited to the embodiment described below. The drawings referred to in the description of the embodiment are schematically shown, and sizes of constituting elements drawn in the figure or the like should be determined in consideration of the following description. In the present disclosure, the description of "approximately" is intended to include, for example, with reference to "approximately constant", a structure of complete constant and also a structure of substantially constant.

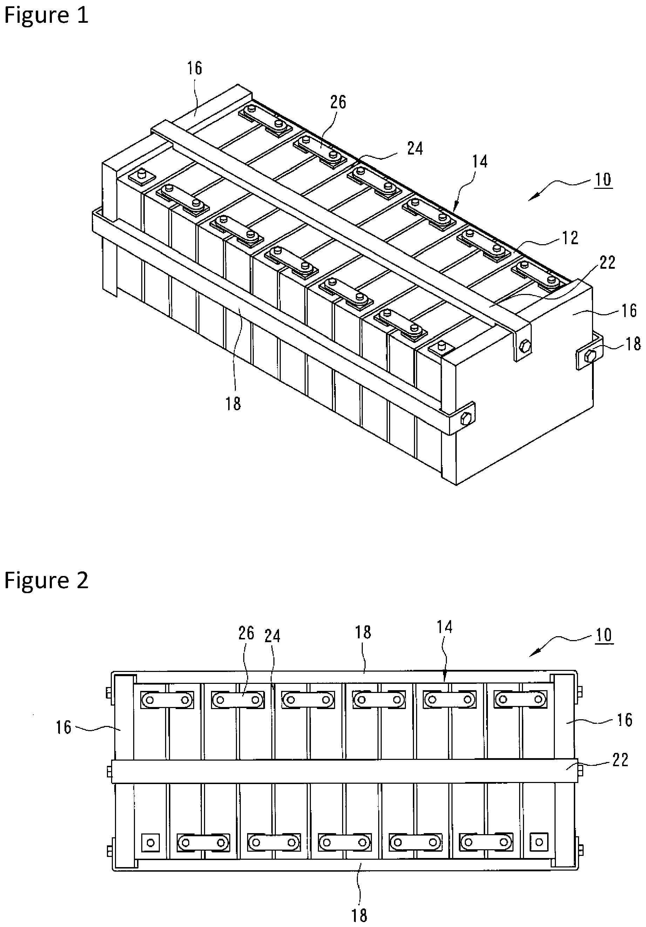

A battery module 10 according to an embodiment of the present disclosure will now be described with reference to FIGs. 1 and 2. FIG. 1 is a perspective diagram of the battery module 10, and FIG. 2 is a plan view of the battery module 10.

As shown in FIGs. 1 and 2, the battery module 10 includes a battery integrated assembly 14 in which a plurality of rectangular secondary batteries 12 are layered, a pair of end plates 16 which sandwich the battery integrated assembly 14 from respective sides in a direction of layering of the secondary batteries 12, a pair of side surface fixation members 18 which bridge the end plates 16 to each other and provided on respective side surfaces of the secondary battery 12, and an upper surface fixation member 22 provided on an upper surface of the secondary battery 12. In the present disclosure, a side on which an electrode plate terminal of the second battery 12 is provided is described as an "upper side", but the description does not limit the orientation when the battery module 10 is equipped on a vehicle or the like, and, for example, the battery module 10 may be equipped with the upper surface of the battery module 10 being placed in a horizontal direction. Further, in the present disclosure, for convenience of the description, the direction of layering of the secondary batteries 12 may also be called a "vertical direction", a side surface direction of the secondary battery 12 may also be called a "lateral direction", and an up-and-down direction may also be called a "height direction".

The battery integrated assembly 14 may include an elastic plate 24 between the secondary batteries 12. As will be described later, when the secondary batteries 12 are bound together along the vertical direction, the elastic plate 24 deforms, so that deformation of the secondary battery 12 can be suppressed. A material of the elastic plate 24 may be, for example, a resin such as polypropylene.

For the secondary batteries 12 of the battery integrated assembly 14, batteries with different capacities, different sizes, different types, or the like, may be used, but desirably, batteries of identical structure are used. In FIGs. 1 and 2, because the secondary batteries of identical structure are used and the secondary batteries 12 are placed in such a manner that positions in the lateral direction of the positive and negative terminals are opposite from each other between adjacent secondary batteries 12, the secondary batteries 12 are in a state in which the positive electrode terminal and the negative electrode terminal are alternately arranged in the vertical direction.

The battery integrated assembly 14 may include a bus bar 26 which electrically connects adjacent secondary batteries 12. In the example structure shown in FIGs. 1 and 2, the positive electrode terminal and the negative electrode terminal of adj acent secondary batteries 12 are connected by the bus bar 26, and the secondary batteries 12 provided in the battery module 10 are connected in series. The form of connection of the secondary batteries 12, however, is not limited to such a configuration.

In the battery module 10, the side surface fixation member 18 and the upper surface fixation member 22 are bridged to a pair of end plates provided at respective ends in the vertical direction, and the end plates are pushed against the battery integrated assembly 14, so as to bind the secondary batteries 12 together. The end plate 16 may be a plate-shape member which is slightly larger than the secondary battery 12. On the end plate 16, a bolt hole for fastening the side surface fixation member 18 and the upper surface fixation member 22 may be formed. The end plate 16 is a member for holding the secondary batteries 12 which are expanded due to charging, and desirably, the end plate 16 is made of a metal such as aluminum, iron, or the like, from the viewpoint of improvement of rigidity.

As described above, the side surface fixation member 18 and the upper surface fixation member 22, along with the end plate 16, have functions to maintain the bound state of the secondary batteries 12 and to hold the battery integrated assembly 14. In other words, a constraining load in the vertical direction is applied from the end plates 16 at respective ends to the battery integrated assembly 14 by bridging the side surface fixation member 18 and the upper surface fixation member 22 between the pair of end plates 16. With this configuration, a compressive stress is applied also to an electrode assembly 30 in the secondary battery 12, so as to suppress enlargement of the distance between the positive electrode and the negative electrode.

The side surface fixation members 18 are provided on respective side surfaces of the battery integrated assembly 14 along the vertical direction. The pair of side surface fixation members 18 are placed to sandwich the secondary batteries 12 from respective ends in the lateral direction, and are desirably placed opposing each other. In the example configuration of FIG. 1, a total of two side surface fixation members 18 are provided, one on each side surface of the battery integrated assembly 14, but no particular limitation is imposed on the number of the side surface fixation members 18.

The side surface fixation member 18 may be, for example, a plate-shape member made of a metal, and having an approximately constant width (length in the height direction). Alternatively, the side surface fixation member 18 may be made of a resin. In the example configuration of FIG. 1, respective ends in a longitudinal direction of each of the side surface fixation members 18 are folded to extend over an end surface of the end plate 16 in the vertical direction, and the folded part is fixed on the end plate 16 by a bolt.

The upper surface fixation member 22 is provided on an upper surface of the battery integrated assembly 14 along the vertical direction. In the example configuration shown in FIGs. 1 and 2, one upper surface fixation member 22 is provided on the upper surface of the battery integrated assembly 14, but no particular limitation is imposed on the number of the upper surface fixation members 22. The upper surface fixation member 22 may be, for example, a plate-shape member made of a metal and having an approximately constant width (length in the height direction). Alternatively, the upper surface fixation member 22 may be made of a resin. In the example configuration of FIG. 1, respective ends in the longitudinal direction of the upper surface fixation member 22 are folded to extend over the end surface of the end plate 16 in the vertical direction, and the folded part is fixed to the end plate 16 by a bolt. Alternatively, the side surface fixation member 18 and the upper surface fixation member 22 may be the same member. With such a configuration, a number of types of components can be reduced, resulting in ease of stock management.

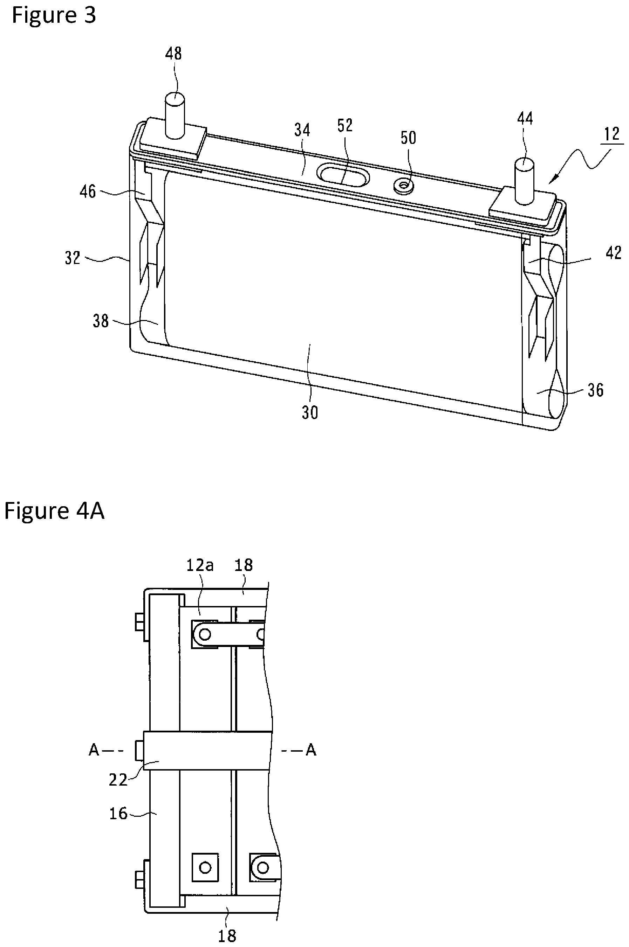

Next, with reference to FIG. 3, a structure of the secondary battery 12 in the battery integrated assembly 14 will be described. The secondary battery 12 is, for example, a non-aqueous electrolyte secondary battery such as a lithium ion battery. FIG. 3 is a perspective diagram of a secondary battery 12 included in the battery module 10 according to the present embodiment, and shows an interior structure of an outer housing 32 in a state in which a page-front side of the outer housing 32 is removed. The secondary battery 12 includes the electrode assembly 30 of a wound type, the outer housing 32 which houses the electrode assembly 30, and a sealing plate 34. The outer housing 32 and the sealing plate 34 are each made of a metal, and are desirably made of aluminum or an aluminum alloy.

The outer housing 32 has a bottom, and a sidewall part which extends in an upright manner on a periphery of the bottom. The side wall part is formed to be approximately perpendicular to the bottom. No particular limitation is imposed on the shape of the outer housing 32. As shown in FIG. 3, the outer housing 32 may have a flat shape elongated more in the lateral direction and the height direction, in particular, the lateral direction, than in the vertical direction. The outer housing 32 is made of a metal material as described above, but a resin film may be attached on an outer surface of the outer housing 32, in order to secure an insulating characteristic. The sealing plate 34 is a member for tightly sealing an interior space of a battery case by blocking an opening of the outer housing 32, and has an approximately rectangular shape elongated in the lateral direction. A periphery of the sealing plate 34 is welded, for example, to a peripheral part of the opening of the outer housing 32.

The electrode assembly 30 has a flat shape, in which a positive electrode 36 and a negative electrode 38 are wound with a separator 40 therebetween. The secondary battery 12 includes the electrode assembly 30 of the wound type in an orientation in which the winding axis is in the lateral direction.

In the electrode assembly 30, the positive electrode 36 protrudes on one end side in the winding axis direction, and the negative electrode 38 protrudes on the other end side in the winding axis direction. A positive electrode current collector 42 is connected to the positive electrode 36, and a negative electrode current collector 46 is connected to the negative electrode 38. Further, a positive electrode terminal 44 is provided on one end in the lateral direction of the sealing plate 34, and a negative electrode terminal 48 is provided on the other end in the lateral direction. The positive electrode terminal 44 is connected to the positive electrode current collector 42, and the negative electrode terminal 48 is connected to the negative electrode current collector 46. The sealing plate 34 has a fluid injection hole 50 for injecting an electrolyte into the outer housing 32, and a discharge vent 52 for discharging gas when a pressure in the battery becomes greater than or equal to a predetermined value. The fluid injection hole 50 is sealed by a sealing plug after the injection.

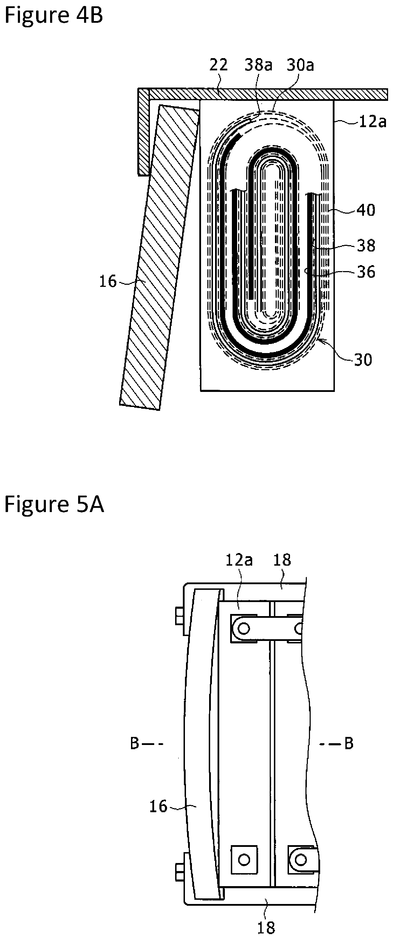

Next, a function of the upper surface fixation member 22 will be described with reference to FIGs. 4A and 4B. FIG. 4A is a plan view of a region near the end plate 16 of the battery module 10 according to an embodiment of the present disclosure during charging, and FIG. 4B is a diagram showing a cross section along a line A-A of FIG. 4A.

During charging, each of the secondary batteries 12 of the battery integrated assembly 14 expands in the vertical direction. Therefore, in a charging state, in the secondary battery 12 sandwiched by other secondary batteries 12 on respective sides, a constraining load applied in the vertical direction is increased, and the compressive stress to the electrode assembly 30 in the secondary battery 12 is also increased. Thus, a risk of spacing apart of the negative electrode 38 and the positive electrode 36, and consequent deposition of lithium is low. On the other hand, in the charging state, because each of the end plates 16 tends to easily deflect to the outer side due to the pressure from an adjacent secondary battery 12a, there is a risk of spacing apart of the secondary battery 12a from the end plate 16, reduction of the compressive stress with respect to the electrode assembly 30 in the secondary battery 12a, and consequent enlargement of the distance between the positive electrode 36 and the negative electrode 38.

As shown in FIG. 4A, by providing the upper surface fixation member 22, a constraining load can be applied also to an upper end of the end plate 16. With this configuration, the deflection of at least the upper end of the end plate 16 can be suppressed, and a compressive stress can be applied to an upper side of the electrode assembly 30. Further, a lower surface fixation member which bridges the end plates 16 to each other may be provided on a lower surface of the battery integrated assembly 14. With this configuration, a constraining load can be applied also to a lower end of the end plate 16, the deflection of the lower end of the end plate 16 can be suppressed, and a compressive stress can be applied to a lower side of the electrode assembly 30.

The upper surface fixation member 22 is desirably provided at an approximate center in the lateral direction of the battery integrated assembly 14. Because the end plate 16 having respective ends in the lateral direction fixed by the side surface fixation member 18 tend to be more easily spaced apart from the secondary battery 12a at the center than at respective ends in the lateral direction, by providing the upper surface fixation member 22 at the approximate center in the lateral direction, the deflection in the vertical direction at the upper end of the end plate 16 can be suppressed, and the compressive stress can be applied to the upper side of the electrode assembly 30.

With reference to FIG. 4B, a state of the electrode assembly 30 in the secondary battery 12a adjacent to the end plate 16 will now be described. FIG. 4B is a diagram cutting, along the vertical direction and the line A-A, the center in the lateral direction of the battery module 10 during charging, and enlarging a region near the secondary battery 12a.

In FIG. 4B, the electrode assembly 30 included in the secondary battery 12a is shown on a cross section in a direction perpendicular to the winding axis, shows the positive electrode 36, the negative electrode 38, and the separator 40 at a winding start part and a winding completion part of the electrode assembly 30, and does not show a winding midway portion. The electrode assembly 30 has a flat shape, with a flat part at the center and curved parts above and below the flat part. In the electrode assembly 30, the positive electrode 36 of a band shape and the negative electrode 38 of a band shape are wound with the separator 40 therebetween, and the negative electrode 38 is larger than the positive electrode 36 in both the width direction and the length direction.

An outermost element of the electrode assembly 30 may be the negative electrode 38. The outermost element of the electrode assembly 30 refers to an electrode positioned at a winding outermost side, of the positive electrode 36 or the negative electrode 38. The separator 40 may be present at a winding outer side of the outermost negative electrode 38. The electrode assembly 30 expands and contracts by repetition of charging and discharging. At a winding inner side, a frictional force applied to the positive electrode 36 and the negative electrode 38 is large, and positional deviation between the positive electrode 36 and the negative electrode 38 tends to not occur. On the other hand, because the applied frictional force is small for the outermost negative electrode 38, the positional deviation tends to occur, and the distance to the positive electrode 36 adjacent on the inner circumferential side tends to become larger. In particular, the positional deviation tends to occur for a winding completion end 38a of the negative electrode 38. Thus, a constraining load is applied by the end plate 16, so as to prevent the distance to the positive electrode 36 from becoming larger.

Because the end plate 16 has respective ends in the lateral direction fixed by the side surface fixation member 18 and the upper end fixed by the upper surface fixation member 22, when a pressure to an outer side is applied from the secondary battery 12a expanded by charging, as shown in FIG. 4B, the lower end deflects to the outer side, and is spaced apart from the secondary battery 12a. On the other hand, because the upper end of the end plate 16 is fixed by the upper surface fixation member 22, the upper end is in contact with the secondary battery 12a. With this configuration, even during the charging, the constraining load is applied from the end plate 16 to the secondary battery 12 at least at the upper side, and the compressive stress is applied to the curved part of the electrode assembly 30 opposing the upper end of the end plate 16.

In at least the secondary battery 12a adjacent to the end plate 16, the winding completion end 38a of the negative electrode 38 faces upward, and is positioned between a half of the height of the electrode assembly 30 and a top part 30a of the curved part of the electrode assembly 30 in a cross section orthogonal to the winding axis. With this configuration, the compressive stress can be applied also to the winding completion end 38a of the negative electrode 38 to which the winding fastening tends to be not applied, and the deposition of lithium near the winding completion end 38a can be suppressed.

In FIG. 4B, because the compressive stress is applied to the curved part at left of the top part 30a (side near the end plate 16) from the upper end of the end plate 16, if the winding completion end 38a of the negative electrode 38 is positioned within this range, the compressive stress from the end plate 16 can be directly applied. Further, even when the position of the winding completion end 38a of the negative electrode 38 is below the curved part, when the position is above the half of the height of the electrode assembly 30, the separator 40 is pulled by the constraining load of the end plate 16, and thus, the compressive stress is applied to the winding completion end 38a of the negative electrode 38.

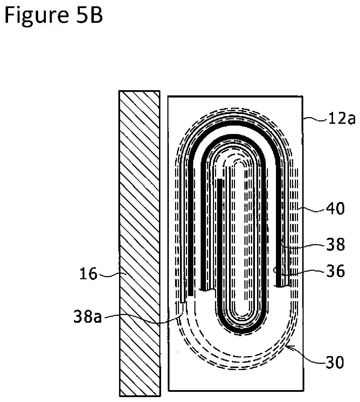

Next, with reference to FIGs. 5A and 5B, a case of a battery module 10 of the related art will be described. FIG. 5A is a plan view of a region near the end plate 16 of the battery module 10 of the related art in the charging state, and FIG. 5B is a diagram showing a cross section along a line B-B of FIG. 5A. Because the secondary battery 12a expands in the charging state, as shown in FIG. 5A, the end plate 16 having respective ends in the lateral direction fixed by the side surface fixation member 18 deflects in the lateral direction, and is spaced apart from the secondary battery 12a with the maximum degree at the center.

Similar to FIG. 4B, FIG. 5B shows the electrode assembly 30 included in the secondary battery 12a in a cross section in a direction perpendicular to the winding axis, shows the positive electrode 36, the negative electrode 38, and the separator 40 at a winding start part and a winding completion part of the electrode assembly 30, and does not show the winding midway part. As described above, because the end plate 16 is spaced apart from the secondary battery 12a, the constraining load is not applied to the secondary battery 12a from the end plate 16, and the compressive stress is not applied to the electrode assembly 30 in the secondary battery 12a. Thus, there is a risk that the distance between the winding completion end 38a of the negative electrode 38 and the positive electrode 36 becomes large, and lithium deposits near the winding completion end 38a. In FIG. 5B, the winding completion end 38a faces downward, and is positioned below the half of the height of the electrode assembly 30 in the cross section orthogonal to the winding axis. However, because the compressive stress is not applied to any position of the electrode assembly 30 from the end plate 16, there is a possibility that the distance between the winding completion end 38a and the positive electrode 36 becomes large, regardless of the direction and the position of the winding completion end 38a.

### REFERENCE SIGNS LIST

10 battery module
12 (rectangular) secondary battery
14 battery integrated assembly
16 end plate
18 side surface fixation member
22 upper surface fixation member
24 elastic plate
26 bus bar
30 electrode assembly
32 outer housing
34 sealing plate
36 positive electrode
38 negative electrode
40 separator
42 positive electrode current collector
44 positive electrode terminal
46 negative electrode current collector
48 negative electrode terminal
50 fluid injection hold
52 discharge vent

## Claims

1. A battery module comprising:
a battery integrated assembly in which a plurality of rectangular secondary batteries are layered;
a pair of end plates that sandwich the battery integrated assembly from respective ends in a direction of layering of the secondary batteries; and
a pair of side surface fixation members provided on respective side surfaces of the secondary battery and an upper surface fixation member provided on an upper surface of the secondary battery, that bridge the end plates to each other, wherein
the secondary battery includes a wound-type electrode assembly having a flat shape in which a positive electrode and a negative electrode are wound with a separator therebetween, in such a manner that a winding axis thereof is disposed in a lateral direction, and
in at least the secondary battery adjacent to the end plate, a winding completion end of the negative electrode faces upward, and is positioned between a half of a height of the electrode assembly and a top part of a curved part of the electrode assembly in a cross section orthogonal to the winding axis.

2. The battery module according to claim 1, wherein
an outermost electrode of the electrode assembly is a negative electrode.

3. The battery module according to claim 1 or 2, wherein
the upper surface fixation member is provided at an approximate center in a lateral direction of the battery integrated assembly.
